# EUROPEAN PATENT SPECIFICATION

(11) **EP 2 870 991 B1**
(45) Date of publication and mention of the grant of the patent: **04.01.2017**
(21) Application number: 13196372.0
(22) Date of filing: 10.12.2013
(51) Int. Cl.: B01D 53/18

(54) **Inlet for scrubber**
Einlass für Gaswäscher
Entrée pour épurateur de gaz

(30) Priority: 08.11.2013 KR 20130135097; 04.12.2013 KR 20130149665
(43) Date of publication of application: 13.05.2015
(73) Proprietor: Mat Plus Co., Ltd., Anseong-si, Gyeonggi-do 456-823 (KR)
(72) Inventor: KIM, Dong Soo, 450-753 Pyeongtaek-si (KR); KHOR, Wooi Keat, Butterworth Penang 12200 Malaysia (KR); LOOI, Chin San, Kulim Kedah, 09000 Malaysia (KR); OMAR, Mohd Hanif, Padang Serai Kedah, 09400 Malaysia (KR); LEE, Yen Chong, Butterworth Penang, 12100 Malaysia (KR)
(74) Representative: Zardi, Marco

(56) References cited:
- DE-A1-102006 000 696
- US-A- 3 009 687
- US-A- 3 593 968
- US-A- 3 959 420
- US-A- 6 019 818

## Description

### TECHNICAL FIELD

The present invention is related with designing inlets for scrubber to be established in manufacturing facilities which discharge poisonous materials including semiconductors, and more specifically related with designing inlets of wet type, or burn-wet type scrubbers.

### BACKGROUND

Srcubbers for detoxicating are installed when constructing semiconductors manufacturing facilities because of the discharge of poisonous gas. Burning type srcubbers which burn poisonous gas flown in, wet type scrubbers which dissolve poisonous gas using liquid like water and burn-wet type scrubbers which burn first and then dissolve are the three types of scrubbers. Wet type scrubbers make the poisonous gas flow into inlet and then the gas dissolved using scrubber liquid or decomposed. In the wet type scrubber, the inlet which makes the poisonous gas flow into main body to be removed by scrubber liquid becomes the pathway for the liquid containing cleaning water or other elements (commonly called "scrubber liquid") to flow in along with poisonous gas.

Even if the scrubber liquid is made to flow in through separate passage from the passage of the poisonous gas, usually the poisonous gas reacts with scrubber liquid on inlet, powder is formed in the pathway of the materials, soon the inlet is to be clogged by the powder. This clog of the inlet cause increase of the expense as well as lowering the productivity of the process due to the exchange of the inlet itself or cleaning process after separating the inlet to reuse afterward.

In case of the wet scrubber described in Korean patent no. 10-0866163 also, only the effective skill to deal with the poisonous gas using scrubber liquid is focused on while the clog phenomena happening in inlet itself described above is not observed.

US 3 009 687 A discloses a device according to the preamble of claim 1.

### SUMMARY

Thus, the object of the present invention is to provide the new structure of inlet that can be used long term without exchanging the inlet by minimizing the clogging phenomena of wet type or burn-wet type of scrubbers.

This object is achieved by providing a scrubber inlet according to claim 1.

Preferably, in the present invention, the double inlet is long enough to reach inside of the lower section, and may further comprise a disc shaped guiding member with an open hole at the center and an vertical guiding part at the circumference thereof. The guiding member is assembled between the outer wall of the outer pipe of the double inlet and the inner wall of the lower section to prevent the mist from being sprayed toward the center.

Preferably, in the present invention, the upper section with the scrubber liquid inlet has a gap between the upper section's inner wall and outer wall, with the scrubber liquid inlet attached to said outer wall and the gap is led to the inner wall of the upper section, and when the scrubber liquid flowing in through the scrubber liquid inlet, it fills the gap and overflows on the upper section wall, passes the inner wall and then flows on the inner wall of the lower section.

Preferably, in the present invention, exit of the scrubber liquid inlets formed on the upper section is arranged in a way that the scrubber liquid flown in from the scrubber liquid inlet can rotate along the inner wall of the cleansing buffer. Moreover, gas inlets and scrubber liquid inlets formed on the upper section and the gas inlets formed on the double inlet are rotatably mounted thereon.

Preferably, in the present invention, in the double inlet, the upper part of the inner pipe is funnel-shaped, surrounded by the inner part of the outer pipe, and the gas inlets are formed on the upper part of the outer pipe, wherein the upper part of the double inlet is thicker than the lower part of the double inlet with the wider gap between the pipes compared to the lower part in order to hold initial influx from the gas inlets, and flange is arranged on the upper part of the outer pipe, with the outer pipe extending downward from the flange, and the nitrogen or inert gas flown down along the gap of the pipes acts as mist blower in order not to form powder at the end of the gap when the mist caused from the scrubber liquid flowing on the wall of the passage for scrubber liquid meets the poisonous gas flown in through the central passage of the double inlet.

### DRAWINGS

Fig. 1 is a cross sectional view of the inlet for scrubber structure of the present invention.
Fig. 2 is a cross sectional view of the upper section set on the upper part of the passage for scrubber liquid of the inlet for the scrubber the present invention.
Fig. 3 is a cross sectional view of the lower section set on the lower part of the passage for scrubber liquid shown in Fig. 2.
Fig. 4 is a cross sectional view to show the double inlet structure composed of double pipes set in upper-inner part of the lower section.
Fig. 5 is a cross sectional view and a plan view to show the guiding member inserted between the double inlet and the wall of the passage for scrubber liquid.

### DETAIL DESCRIPTIONS OF THE INVENTION

Following is the detailed description of the preferred embodiment of the present invention referring to the attached Figures.

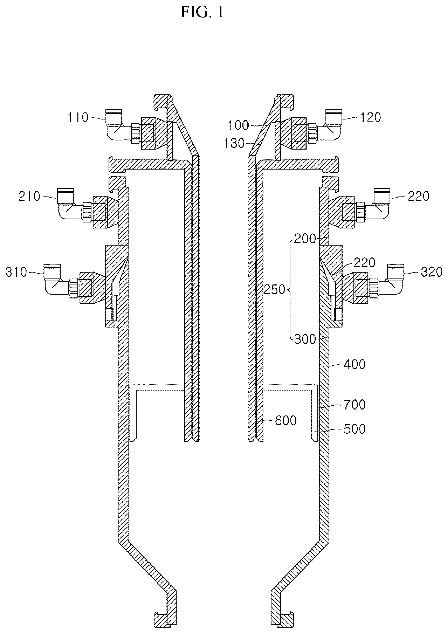

In Fig. 1, the whole structure of the inlet for the scrubber of the present invention is shown in a cross section. Inlet for scrubber comprises double inlet 100 which can be the primary passage of the poisonous gas influx, upper section 250 arranged on its lower part with at least partially surrounding the double inlet and the lower section 400 closely arranged to the upper section at its lower part.

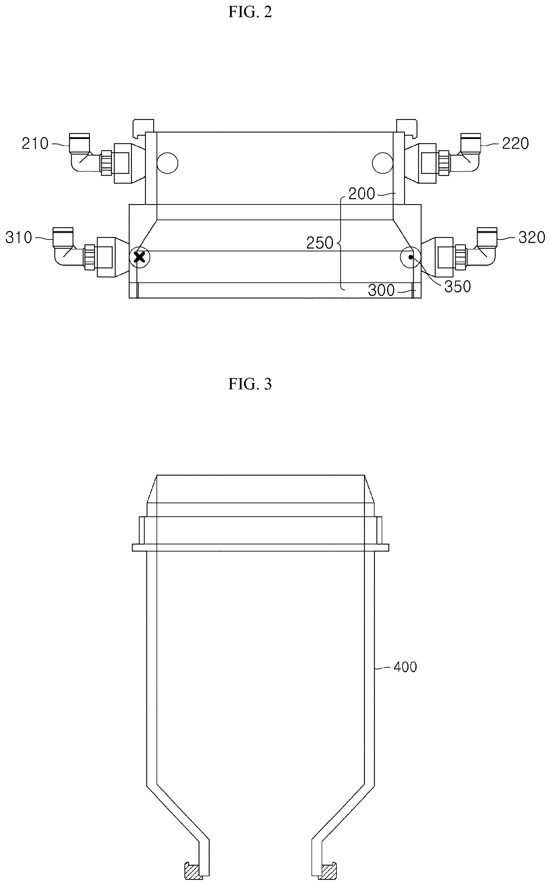

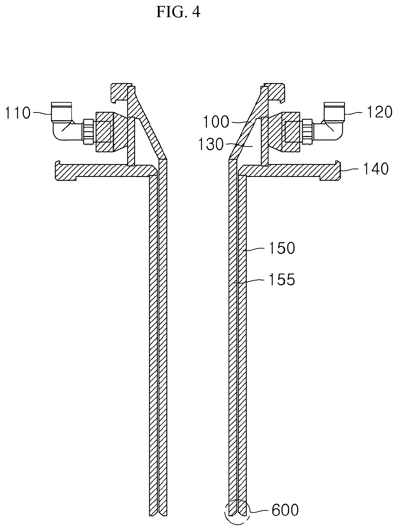

Fig. 2 shows the upper section 250 arranged on the upper part of the passage for scrubber liquid, Fig. 3 shows the lower section 400 placed at bottom of upper section, and Fig. 4 shows the double inlet structure.

First, passage for scrubber liquid will be explained referring to Fig. 1 to Fig. 3.

The upper section 250, placed comparatively on upper part is formed integral with the gas inlet column 200 and includes a pair of gas inlets 210, 220 mounted to supply nitrogen but includes the scrubber liquid inlet column 300 formed below it. Scrubber liquid inlet column 300 also has a pair of scrubber liquid inlets 310, 320 rotatable to adjust their directions, arranged such that the scrubber liquid may flow in and out in tangential direction with respect to wall of the scrubber liquid inlet column 300 which is formed of cylinder or a polygon pillar similar to cylinder shape. A pair of scrubber liquid inlets 310, 320 are arranged to face each other and their exit direction is arranged so that scrubber liquid flowing in through the scrubber liquid inlets 310, 320 can rotate along the wall to make whirls. The scrubber liquid can be water or other liquid mixed with adequate chemicals.

The openings of scrubber liquid inlets 310, 320 are connected to gap 350 between the outer wall and the inner wall of the scrubber liquid inlet column 300, and the scrubber liquid is to fill the gap 350 and overflow on the inner wall of the scrubber liquid inlet column 300.

The structure of these scrubber liquid inlets 310, 320 enables the scrubber liquid inflow to flow down with rotating along the wall, not to fall down vertically along inner wall of the lower section 400. This rotating movement can prevent the inlet from clogging since the movement itself can prevent and remove the powder.

A pair of gas inlets 210, 220 formed on the gas inlet column arranged to upper part of a scrubber liquid inlet column 300 are to be placed opposite from each other.

These inlets supply nitrogen or inert gas, making the gas flow down over the scrubber liquid, functioning as curtain blocking the scrubber liquid. So to speak, nitrogen and-or inert gas prevent the scrubber liquid from mixing with the poisonous gas to make powder by surrounding the surface of the scrubber liquid. Thus, it is preferable that a pair of gas inlets 210, 220 be mounted rotatably, facing each other from the opposite sites like the scrubber liquid inlets 310, 320.

This upper section 250 is assembled on top of the second scrubber liquid buffer 400. The lower section 400 is formed in cylinder or polygon pillar simlar to cylinder, its lower part slightly getting narrower like nozzle, connecting with the main reactor. Upper part and lower part has a few recesses or rises for assembling shown in Fig. 3 and the techniques for forming the recesses and rises are simple enough for the ordinary people in the technical field.

Next, the present invention provides double inlet 100 shown in Fig. 4 to prevent the powder more effectively generated by contact the scrubber liquid with poisonous gas.

Double inlet 100 is composed of two layer pipes 150, 155, wherein the inner pipe 155 can be the central passage for the poisonous gas, the gap 130 between the two pipes can be the passage for the gas including the nitrogen etc. The outer layer of the pipe of the two has a pair of gas inlets 110, 120, making the nitrogen or inert gas flow in and flow through the gap 130 between the pipes.

The upper part of the inner pipe 155 forms funnel shape, surrounded by the inner part of the outer pipe 150, and the gas inlets 110, 120 are mounted on the upper part of the outer pipe 150, with the upper part thicker than other lower part to have wide gap affordable to hold initial influx. Also, on the upper part of the outer pipe 150 forms sort of flange 140 for the convenience of the assembling with the outer pipe 150 extending from it.

The nitrogen or the inert gas flown down along the gap 130 of the pipes acts as a mist blower in order not to form powder at the bottom 600 of the gap when the mist created by scrubber liquid flowing down along the wall of the passage for scrubber liquid meets with poisonous gas flown in through the central passage.

That is, in the present invention, when the scrubber liquid is supplied, it is spilt on the wall of the passage for scrubber liquid rotating to prevent powder generation by its own moment, and nitrogen or inert gas is supplied through gas inlets 210, 220 formed on the upper section acting as a curtain against the scrubber liquid to prevent powder generation at first hand, furthermore, making the nitrogen or the inert gas be blown into through the gap 130 between the pipes of the double inlet of the passage for the poisonous gas, preventing the powder created by the mist at second hand, resulting in the realizing the inlet for scrubber that can be used without clogging for long time.

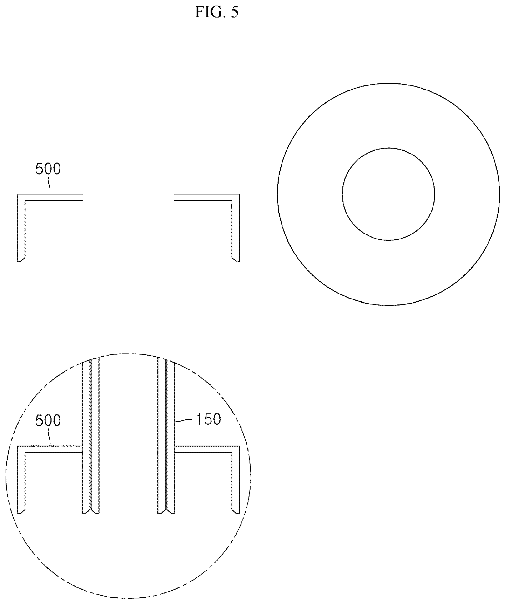

Furthermore, guiding member 500 can be mounted to make sure pass way guiding for the scrubber liquid. I.e., the guiding member 500 comprising the flat part of the disc shape with a hole opening in the center and guiding part vertically folded from the outer end of the disc is shown in Fig. 5.

This guiding member 500 is to be inserted forcefully between the outer wall of the outer pipe 150 of the double inlet 100 and the inner wall of the lower section 400. The vertical side of the guiding part leads the scrubber liquid not to deviate from the inner wall of the passage for scrubber liquid resulting in preventing the creation of the mist, preventing the creation of the powder completely in the end. The gas inlets 110, 120, 210, 220 and the scrubber liquid inlets 310, 320 are formed in each pair in above practice,
but more than a pair can be formed. -Furthermore, the upper section and the lower section can be formed integrally.

According to the present invention, the exchanging period of the inlet for scrubbers becomes 10 times longer than of that of conventional type, increasing productivity of the semiconductor/LCD production process.

The rights of the present invention is not limited within the implementation explained above, but is defined by the boundaries written on application, and it is self-evident that those who have common knowledge about the field of the present invention can adapt and reform in various ways within the rights written on application.

### [Explanation of the symbols]

- 100:: double inlet
- 110, 120, 210, 220:: gas influx
- 130:: gap
- 150, 155:: pipe
- 200:: gas inlet column
- 250:: upper section
- 300:: scrubber liquid inlet column
- 400:: lower section
- 310, 320:: scrubber liquid inlet
- 600:: (gap(350)) end

## Claims

1. Inlet for scrubber including a double inlet (100); and a passage for scrubber liquid assembled with the double inlet (100);
wherein the passage for scrubber liquid includes a lower section (400) having a hollow pillar shaped wall with vertical orientation of the pillar axis; and an upper section loaded on top of the lower section (400) with hollow pillar shaped wall; wherein at least a pair of scrubber liquid inlets (310, 320) are arranged at the upper section and
wherein the double inlet (100) is made of double pipes (155, 150) and is arranged at inside of an upper part of the upper section,
wherein a central passage of the double pipes (155, 150) is a poisonous gas inlet and a gap between the double pipes is a passage for nitrogen or inert gas such that the nitrogen or inert gas blocks scrubber liquid mist around an end (600) of the double inlet (100) to prevent scrubber liquid from interacting with poisonous gas and forming powder;
**characterized by** the fact that the scrubber liquid inlets face each other and the exit directions of the scrubber liquid inlets are arranged for the scrubber liquid to flow tangentially and rotationally along the upper and the lower section walls, and at least a pair of gas inlets (210, 220) formed at the upper section allow nitrogen or inert gas to flow in and to form atmosphere over a surface of the scrubber liquid to act as a curtain.

2. The inlet for scrubber of claim 1, wherein the double inlet (100) is long enough to reach inside of the lower section (400), and further comprises a disc shaped guiding member (500) with an open hole at the center and an vertical guiding part at the circumference thereof, wherein the guiding member (500) is assembled between the outer wall of the outer pipes (150) of the double inlet (100) and the inner wall of the lower section (400) to prevent the mist from being sprayed toward the center.

3. The inlet for scrubber of claim 1, wherein the upper section with the scrubber liquid inlet has a gap (350) between an inner wall of the upper section and an outer wall of the upper section where the scrubber liquid inlet (320) is attached, and the gap (350) is led to the inner wall of the upper section, and when the scrubber liquid flowing in through the scrubber liquid inlet (320), it fills the gap (350) and overflows on the upper section wall, passes the inner wall and then flows on the inner wall of the lower section (400).

4. The inlet for scrubber of claim 1, wherein scrubber liquid inlets (320) formed on the upper section are rotatably mounted thereon so that exit direction of the scrubber liquid inlets (320) can be arranged for scrubber liquid to flow along the passage for scrubber liquid wall with rotating.

5. The inlet for scrubber of claim 3, wherein in the double inlet (100), the upper part of the inner pipe (155) is funnel-shaped, surrounded by the inner part of the outer pipe (150), and gas inlets (120) are formed on the upper part of the outer pipe (150), and wherein the upper part of the double inlet (100) is thicker than the lower part of the double inlet with a wider gap (130) between the pipes (150, 155) compared to the lower part in order to hold initial influx from the gas inlet (120), and flange is arranged on the upper part of the outer pipe (150), with the outer pipe (150) extending downward from the flange, and the nitrogen or inert gas flown down along the gap of the pipes acts as mist blower in order not to form powder at the end (600) of the gap when the mist caused from the scrubber liquid flowing on the wall of the passage for scrubber liquid meets the poisonous gas flown in through the central passage.

## Patentansprüche

1. Einlass für Gaswäscher umfassend einen Doppeleinlass (100); und einen mit dem Doppeleinlass (100) montierten Durchgang für Gaswäscherflüssigkeit;
wobei der Durchgang für Gaswäscherflüssigkeit einen unteren Abschnitt (400), der eine hohle säulenförmige Wand mit vertikaler Ausrichtung der Säulenachse aufweist, und einen auf den unteren Abschnitt (400) gesetzten oberen Abschnitt mit hohler säulenförmiger Wand umfasst;
wobei wenigstens ein Paar von Gaswäscherflüssigkeitseinlässen (310, 320) an dem oberen Abschnitt angeordnet sind und
wobei der Doppeleinlass (100) aus Doppelrohren (155, 150) besteht und an der Innenseite eines oberen Teils des oberen Abschnitts angeordnet ist,
wobei ein zentraler Durchgang der Doppelrohre (155, 150) ein Einlass für giftiges Gas ist und ein Spalt zwischen den Doppelrohren ein Durchgang für Stickstoff oder Inertgas ist, so dass der Stickstoff oder das Inertgas einen Gaswäscherflüssigkeitsnebel um ein Ende (600) des Doppeleinlasses (100) herum blockiert, um zu verhindern, dass Gaswäscherflüssigkeit mit giftigem Gas interagiert und ein Pulver bildet;
**dadurch gekennzeichnet, dass** die Gaswäscherflüssigkeitseinlässe einander zugewandt sind und die Austrittsrichtungen der Gaswäscherflüssigkeitseinlässe so angeordnet sind, dass die Gaswäscherflüssigkeit tangential und in Drehrichtung entlang der Wände des oberen und des unteren Abschnitts strömt, und wenigstens ein Paar von an dem oberen Abschnitt ausgebildeten Gaseinlässen (210, 220) erlauben, dass Stickstoff und Inertgas einströmt und eine Atmosphäre über einer Oberfläche der Gaswäscherflüssigkeit bildet, um als Vorhang zu wirken.

2. Einlass für Gaswäscher nach Anspruch 1, wobei der Doppeleinlass (100) lang genug ist, um die Innenseite des unteren Abschnitts (400) zu erreichen, und ferner ein scheibenförmiges Führungselement (500) mit einem offenen Loch im Zentrum und ein vertikales Führungselement an seinem Umfang umfasst, wobei das Führungselement (500) zwischen der Außenwand der Außenrohre (150) des Doppeleinlasses (100) und der Innenwand des unteren Abschnitts (400) montiert ist, um zu verhindern, dass Nebel in Richtung des Zentrums gesprüht wird.

3. Einlass für Gaswäscher nach Anspruch 1, wobei der obere Abschnitt mit dem Gaswäscherflüssigkeitseinlass einen Spalt (350) zwischen einer Innenwand des oberen Abschnitts und einer Außenwand des oberen Abschnitts aufweist, wo der Gaswäscherflüssigkeitseinlass (320) angebracht ist, und der Spalt (350) zu der Innenwand des oberen Abschnitts geführt ist, und wenn die Gaswäscherflüssigkeit durch den Gaswäscherflüssigkeitseinlass (320) einströmt, sie den Spalt (350) füllt und über die Wand des oberen Abschnitts strömt, an der Innenwand vorbeigeht und dann an der Innenwand des unteren Abschnitts (400) strömt.

4. Einlass für Gaswäscher nach Anspruch 1, wobei an dem oberen Abschnitt ausgebildete Gaswäscherflüssigkeitseinlässe (320) drehbar daran angebracht sind, so dass die Ausgangsrichtung der Gaswäscherflüssigkeitseinlässe (320) so angeordnet werden kann, dass Gaswäscherflüssigkeit entlang der Wand des Durchgangs für Gaswäscherflüssigkeit mit einer Drehbewegung strömt.

5. Einlass für Gaswäscher nach Anspruch 3, wobei in dem Doppeleinlass (100) der obere Teil des Innenrohrs (155) trichterförmig und umgeben von dem Innenteil des Außenrohrs (150) ist, und Gaseinlässe (120) an dem oberen Teil des Außenrohrs (150) ausgebildet sind, und wobei der obere Teil des Doppeleinlasses (100) dicker als der untere Teil des Doppeleinlasses (100) mit einem breiteren Spalt (130) zwischen den Rohren (150, 155) verglichen mit dem unteren Teil ist, um den anfänglichen Zustrom von dem Gaseinlass (120) zu halten, und an dem oberen Teil des Außenrohrs (150) ein Flansch angeordnet ist, wobei das Außenrohr (150) sich von dem Flansch nach unten erstreckt, und der Stickstoff oder das Inertgas, das entlang dem Spalt der Rohre strömen gelassen wird, als Nebelgebläse wirkt, so dass kein Pulver an dem Ende (600) des Spalts ausgebildet wird, wenn der Nebel, der dadurch verursacht wird, dass die Gaswäscherflüssigkeit, die an der Wand des Durchgangs für Gaswäscherflüssigkeit strömt, auf das giftige Gas trifft, das durch den zentralen Durchgang strömen gelassen wird.

## Revendications

1. Entrée pour épurateur de gaz incluant une double entrée (100), et un passage pour le liquide d'épuration assemblé avec la double entrée (100),
dans laquelle le passage pour le liquide d'épuration inclut une section inférieure (400) ayant une paroi en forme de pilier creux avec un orientation verticale de l'axe du pilier, et une section supérieure posée au dessus de la section inférieure (400) avec une paroi en forme de pilier creux, dans laquelle au moins une paire d'entrée du liquide d'épuration (310, 320) sont placées au niveau de la section supérieure et
dans laquelle la double entrée (100) est faite de doubles tuyaux (155, 150) et est placée à l'intérieur d'une partie supérieure de la section supérieure,
dans laquelle un passage central des doubles tuyaux (155, 150) est une entrée de gaz toxique et un espace entre les double tuyaux est un passage pour de l'azote ou un gaz inerte pour que l'azote ou le gaz inerte bloque la brume de liquide d'épuration autour d'une extrémité (600) de la double entrée (100) pour empêcher le liquide d'épuration d'interagir avec le gaz toxique et pour former une poudre,
**caractérisée en ce que** les entrées du liquide d'épuration se font face et les directions de sortie des entrées de liquide d'épuration sont placées de façon à ce que le liquide d'épuration circule tangentiellement et de manière rotationnelle le long des parois des sections supérieures et inférieures, et au moins une paire d'entrées de gaz (210, 220) formées au niveau de la section supérieure permettent à l'azote ou au gaz inerte d'entrer et de former une atmosphère au-dessus d'une surface du liquide d'épuration pour agir comme un rideau.

2. Entrée pour un épurateur de gaz selon la revendication 1, dans laquelle la double entrée (100) est assez longue pour atteindre l'intérieur de la section inférieure (400) et en outre comprend un élément de guidage (500) en forme de disque avec un orifice ouvert au centre et une pièce de guidage vertical au niveau de sa circonférence, où l'élément de guidage vertical (500) est assemblé entre la paroi externe des tuyaux externes (150) de la double entrée (100) et la paroi interne de la section inférieure (400) pour empêcher la brume d'être vaporisée vers le centre.

3. Entrée pour épurateur de gaz selon la revendication 1, **caractérisée en ce que** la section supérieure avec l'entrée du liquide d'épuration présente un espace (350) entre une paroi intérieure de la section supérieure et une paroi extérieure de la section supérieure où l'entrée du liquide d'épuration (320) est fixée, et l'espace (350) est conduit vers la paroi intérieure de la section supérieure, et quand le liquide d'épuration entrant par l'entrée du liquide d'épuration (320), il remplit l'espace (350) et déborde sur la paroi de la section supérieure, passe la paroi intérieure et ensuite coule sur la paroi intérieure de la section inférieure (400).

4. Entrée pour épurateur de gaz selon la revendication 1, **caractérisée en ce que** les entrées du liquide d'épuration (320) formées sur la section supérieure sont montées de manière rotative de telle manière que la direction de sortie des entrées du liquide d'épuration (320) peut être arrangée par rotation afin que le liquide d'épuration circule le long du passage pour la paroi du liquide d'épuration.

5. Entrée d'épurateur de gaz selon la revendication 3, **caractérisée en ce que** la double entrée (100), la partie supérieure du tuyau intérieur (155) est en forme d'entonnoir, entouré par la partie intérieure du tuyau extérieur (150), et les entrées de gaz (120) sont formées sur la partie supérieure du tuyau extérieur (150), et **en ce que** la partie supérieure de la double entrée (100) est plus épaisse que la partie inférieure de la double entrée avec un espace plus large (130) entre les tuyaux (150, 155) comparé à la parie inférieure afin de contenir l'afflux initial provenant de l'entrée de gaz (120) et une bride est placée sur la partie supérieure du tuyau extérieur (150), avec le tuyau extérieur (150) s'étendant vers le bas à partir de la bride, et l'azote ou le gaz inerte qui coule le long de l'espace des tuyaux sert de brumisateur afin de ne pas former de poudre à l'extrémité (600) de l'espace quand la brume créée par la circulation du liquide d'épuration sur la paroi du passage pour le liquide d'épuration rencontre le gaz toxique entré par le passage central.
